# EUROPÄISCHE PATENTSCHRIFT

(11) **EP 0 810 917 B1**
(45) Veröffentlichungstag und Bekanntmachung des Hinweises auf die Patenterteilung: **11.04.2001**
(21) Anmeldenummer: 96904819.8
(22) Anmeldetag: 20.02.1996
(51) Int. Cl.: B29B 7/24, B29B 7/60

(54) **VORRICHTUNG FÜR DIE ABGABE VON FLIESSFÄHIGEN, AUS WENIGSTENS ZWEI MITEINANDER REAGIERENDEN KOMPONENTEN BESTEHENDEN STOFFEN, INSBESONDERE GIESSHARZ**
DELIVERY DEVICE FOR FREE-FLOWING MATERIALS CONSISTING OF AT LEAST TWO MUTUALLY REACTANT COMPONENTS, IN PARTICULAR CASTING RESINS
DISPOSITIF POUR DISTRIBUER DES MATERIAUX COULANTS COMPOSES D'AU MOINS DEUX CONSTITUANTS MUTUELLEMENT REACTIFS, NOTAMMENT DES RESINES DE COULEES

(30) Priorität: 20.02.1995 DE 19505778; 11.05.1995 DE 19516860
(43) Veröffentlichungstag der Anmeldung: 10.12.1997
(73) Patentinhaber: WILHELM HEDRICH VAKUUMANLAGEN GmbH & Co. KG, D-35630 Ehringshausen-Katzenfurt (DE)
(72) Erfinder: HÄUSER, Erhard, D-35641 Schöffengrund (DE)
(74) Vertreter: Müller, Eckhard, Dr.
(86) Internationale Anmeldenummer: EP9600688
(87) Internationale Veröffentlichungsnummer: WO9626057

(56) Entgegenhaltungen:
- EP-A- 0 225 604
- EP-A- 0 644 025
- DE-A- 3 420 222
- DE-A- 4 208 769
- NL-A- 7 702 748
- US-A- 4 275 822

## Beschreibung

Die Erfindung bezieht sich auf eine Vorrichtung für die Abgabe von fließfähigen, aus wenigstens zwei miteinander reagierenden Komponenten bestehenden Stoffen, insbesondere Gießharz, gemäß dem Oberbegriff des Anspruches 1.

Eine Vorrichtung zum Befüllen wenigstens einer Gießform mit gießfähig flüssigen Medien ist bspw. aus der DE 34 20 222 A1 bekannt, wobei die Komponenten der Gießmasse mittels Fördereinrichtungen wenigstens einer Mischeinrichtung zugeführt werden, von welcher die Gießmasse zu der wenigstens einen Gießform gelangt. Die Fördereinrichtung ist als Kolben-Zylinder-Anordnung ausgeführt, welcher ein Rückzugszylinder zur Rückbewegung des Förderkolbens der Kolben-Zylinder-Anordnung zugeordnet ist. Das bekannte Dosiersystem ist jedoch so ausgelegt, daß das Volumen der Kolben-Zylinder-Anordnung für die Füllung der jeweiligen Gießform reicht, wodurch sich bei großen Gießformen entsprechend große Bauformen ergeben und damit ein entsprechend hoher Kostenaufwand erforderlich ist. Die Druckgeliervorrichtung ist daher begrenzt einsetzbar und muß stets auf die entsprechenden Erfordernisse abgestellt werden. Auch ist bei dieser Vorrichtung den Förderkolben für die beiden Komponenten eine Rückzugseinrichtung zugeordnet, wobei die Förderkolben über eine gemeinsame Verbindungsbrücke zum Zwecke des synchronen Laufs miteinander verbunden sind. Die Zufuhr des Antriebsfluids zu den Förderkolben erfolgt aus Druckbehältern, wobei das Antriebsfluid beider Förderkolben den gleichen Druck aufweist.

Aus der NL-A-77 02 748 ist eine Vorrichtung zum Dosieren und Mischen von Komponenten bekannt, bei welcher die beiden Kolben-Zylinder-Anordnungen über eine gemeinsame Betätigungsbrücke antreibbar sind. Es ist also eine starre mechanische Kopplung der beiden Kolben-Zylinder-Anordnungen vorgesehen.

Bei der Anlage gemäß der EP-A2-0 225 604 werden Kolben-Zylinder-Anordnungen mit zweigeteilten Kolben eingesetzt. Diese zweigeteilten Kolben bestehen aus einem Förderkolben und einem Rückzugskolben zwischen denen eine Kolbenstange angeordnet ist. Die Übertragung der Förderkraft auf die Förderkolben erfolgt mittels einer Beaufschlaqunq der Rückseite des Rückzuqskolbens mit Druckfluid.

Die aus der DE-A-42 08 769 bekannte Anlage weist ebenfalls eine Betätigungsbrücke für die Betätigung der Förder- und Dosierkolben beziehungsweise Kolben-Zylinder-Anordnungen auf. Die Dosierkolben der einzelnen Dosierkammern sind mechanisch mittels der Betätigungsbrücke miteinander verbunden und werden von einem gemeinsamen Antrieb getätigt.

Der Erfindung liegt die Aufgabe zugrunde, eine Vorrichtung der eingangs genannten Art dahingehend weiterzuentwickeln, daß sie in Standardbaugrößen und vorzugsweise guter Handhabbarkeit der Kolben-Zylinder-Anordnungen für unterschiedlichste Volumen der Gießformen einsetzbar ist.

Die Aufgabe wird i. w. gelöst durch die kennzeichnenden Merkmale des Anspruchs 1.

Die erfindungsgemäße Vorrichtung ist universell einsetzbar für unterschiedliche Volumen der Gießlinge. Dabei werden abhängig vom Volumen der Gießlinge in der Regel mehrere Hübe von Kolben-Zylinder-Anordnungen ausgeführt. Die untere Auslegungsgrenze für das Verdrängungsvolumen der Kolben-Zylinder-Anordnungen wird dabei i. w. durch die Viskosität der zu fördernden Komponenten und die Hubfrequenz des Förderkolbens in bezug auf die geforderte Förderrate bestimmt. Mit zunehmender Viskosität, d.h. zähflüssigerer Komponente, werden größere Zulaufquerschnitte zu den Kolben-Zylinder-Anordnungen erforderlich, um in der durch die Hubfrequenz vorgegebenen Zeitintervallen eine Füllung der Produkträume der Kolben-Zylinder-Anordnungen zu gewährleisten. Auf den Zulaufquerschnitt ist insbesondere dann zu achten, wenn nur der statische Zulaufdruck des Vorratsbehälters bei der Füllung des Zylinders auf die Komponente wirkt. Die weiterhin in die Bemessung des Verdrängungsvolumens eingehende Hubfrequenz ergibt sich aus dem Quotienten aus Förderrate und Hubvolumen. Gegenüber der i. w. funktionsbedingten Untergrenze wird nach der Erfindung die Obergrenze für das Verdrängungsvolumen der Kolben-Zylinder-Anordnungen sowohl als Funktion in bezug auf die geforderte Dosiergenauigkeit und synchrone Betriebsweise der beiden Kolben-Zylinder-Anordnungen als auch von den Kosten und der Handhabbarkeit des Systems bestimmt. Denn mit zunehmenden Verdrängungs- bzw. Hubvolumen der Kolben-Zylinder-Anordnung muß auch das Volumen des Antriebsfluides entsprechend zunehmen. Dadurch nimmt die Elastizität des Gesamtsystems als Summe der mechanischen Elastizität des Gehäuses von Antriebseinheit und Kolben-Zylinder-Anordnung einerseits und der Elastizität der Fluide zu, wodurch die Dosiergenauigkeit beeinträchtigt wird. Hierbei ist zu berücksichtigen, daß die Vorrichtung für Förderdrücke von 100 bar und mehr ausgelegt sein muß. Als weiteres Kriterium gehen in die Obergrenze des Verdrängungsvolumens die Kosten für den baulichen Aufwand der Kolben-Zylinder-Anordnungen bzw. das Gesamtsystem ein. Ein weiteres Kriterium ist die gute Handhabbarkeit der Einzelbauteile, z.B. zum Zwecke der Wartung und Reparatur.

In einer ersten vorteilhaften Ausgestaltung der Erfindung ist es vorgesehen, daß das Verdrängungsvolumen der Kolben-Zylinder-Anordnungen zwischen 0,1 und 4 Litern, vorzugsweise bei etwa 1 Liter liegt. Es hat sich gezeigt, daß zu diesen Auslegungsgrenzen ein weiter Anwendungsbereich für unterschiedlichste Gießvolumen abgedeckt werden kann, wobei die oben beschriebenen Kriterien hinsichtlich Viskosität, Hubfrequenz, Dosiergenauigkeit, Kostenaufwand, Handhabung, Förderrate i. w. eingehalten werden können.

Weiterhin ist nach der Erfindung eine Einrichtung zur Erfassung der Position der Förderkolben vorgesehen. Dies kann bspw. mittels wenigstens einem Inkrementalgeber, einem Sensor, Endlagenschalter o. dgl. Detektor erfolgen, welcher der Antriebseinrichtung und/oder der oder den Kolben-Zylinder-Anordnungen zugeordnet ist.

Im Rahmen der Erfindung liegt es auch, daß ein Absperrorgan für den Ein- und/oder Auslaß der Komponente in den Förderraum, vorzugsweise in den sich an den Förderraum anschließenden Gehäuseboden der jeweiligen Kolben-Zylinder-Anordnung integriert ist. Durch diese Maßnahme lassen sich die Zuflußwege zur Kolben-Zylinder-Anordnung bzw. zur Mischeinrichtung auf ein Minimum reduzieren, was zu entsprechend geringeren Strömungswiderständen führt. Dies erweist sich insbesondere für den Zufluß der jeweiligen Komponente vom Vorratsbehälter zur Kolben-Zylinder-Anordnung als besonders vorteilhaft.

Konstruktiv besonders günstig ist es nach der Erfindung, wenn der Förderkolben und der Rückzugskolben der Rückzugseinrichtung in Abstand voneinander an einer Kolbenstange gehalten sind, wobei zwischen Förderkolben und Rückzugskolben eine Zwischenwandung angeordnet ist, die einen dem Förderkolben zugewandten Antriebsraum für das Antriebsfluid und einen dem Rückzugskolben zugewandten Raum zur Beaufschlagung mit einem Fluid für die Rückzugsbewegung des Förderkolbens voneinander trennt. Derartige Kolben-Zylinder-Anordnungen mit Rückzugseinrichtung sind als Standardbauteile auch einfach handhabbar.

Als Antriebseinrichtung kann nach der Erfindung jeder Kolben-Zylinder-Anordnung jeweils eine Antriebskolben-Zylinder-Anordnung zugeordnet sein, deren Zylinderraum mit dem Antriebsraum der jeweiligen Kolben-Zylinder-Anordnung verbunden ist. Bei dieser Ausführungsform können die Volumenverhältnisse der zu mischenden Komponenten über eine Ansteuerung der Antriebseinheit frei vorgewählt werden, welche auch gleichzeitig für eine Synchronbewegung der Kolben-Zylinder-Anordnung sorgt. Selbstverständlich kann für die Synchronbewegung der Kolben-Zylinder-Anordnungen auch eine separate Steuerung vorgesehen sein.

Alternativ ist es auch möglich, daß die Antriebseinrichtung eine Antriebs-Zylinder-Anordnung mit einem Stufenkolben aufweist, dessen einzelne Zylinderräume jeweils einem Antriebsraum einer Kolben-Zylinder-Anordnung zugeordnet sind. Vorteilhaft hierbei ist der relative geringe bauliche Aufwand für die Antriebseinrichtung und die Einrichtung zur Erfassung der Position des oder der Förderkolben, wobei diese Einrichtung vorzugsweise Weise der Antriebskolben-Zylinder-Anordnung zugeordnet ist. Bei dieser Ausführungsform der Antriebseinrichtung ist das Dosierverhältnis der Kolben-Zylinder-Anordnungen durch die Abstufung des Antriebskolbens festgelegt und zugleich eine Synchronisation der Förderkolben der Kolben-Zylinder-Anordnungen gegeben.

Insoweit empfiehlt es sich nach der Erfindung, daß zwischen den Zylinderräumen eine Ausgleichsventileinrichtung vorgesehen ist, um die Füllzustände der einzelnen, für die Förderung der Komponenten vorgesehenen Kolben-Zylinder-Anordnungen vor Beginn der Förderung abtasten und die zu beaufschlagenen Fluidmengen des Antriebssystems ausgleichen zu können.

Selbstverständlich kann auch eine direkte Beaufschlagung der Förderkolben mit Druckfluid vom Antriebsaggregat erfolgen. Insoweit muß jedoch sichergestellt sein, daß das Druckfluid mit der jeweiligen Komponente verträglich oder darauf abgestimmt ist.

Allen erfindungsgemäßen Vorrichtungen gemeinsam ist, daß die Kolben-Zylinder-Anordnungen und die Antriebseinrichtungen voneinander getrennte Baugruppen darstellen, so daß es möglich ist, für gleiche Grundbaueinheiten von Kolben-Zylinder-Anordnungen unterschiedliche Antriebsbaugruppen vorzusehen. Hierdurch ist insgesamt ein Baukastensystem gegeben, bei welchem die jeweiligen Antriebsbaugruppen entsprechend den Erfordernissen ausgewählt werden können.

Im Rahmen der Erfindung liegt es auch, daß die Antriebseinrichtung dazu ausgebildet ist, vermittels des Antriebsfluids über die Förderkolben der Kolben-Zylinder-Anordnungen während der Gelierphase einen entsprechenden Nachpreßdruck auf der oder den Gießformen aufrechtzuerhalten, so keine weiteren Einrichtungen für die Erzeugung eines Nachdruckes erforderlich sind.

Nach einem weiteren Gedanken der Erfindung kann der Förderkolben einer Kolben-Zylinder-Anordnung als Plungerkolben ausgebildet sein, wobei die Trennung zwischen Produktraum und Antriebsraum durch eine vorzugsweise im Zylinderraum feststehende Dichtung erfolgt.

Unter Umständen kann es sich nach der Erfindung auch empfehlen, daß für die Zuführung der jeweiligen Komponente vom Vorratsbehälter zur Kolben-Zylinder-Anordnung eine Ladepumpe o. dgl. Pumpeinrichtung vorgesehen ist. Eine solche Unterstützung der Förderung der Komponente kann bspw. durch eine entsprechende Ausbildung innerhalb des Vorratsbehälters selbst, bspw. mittels einer im Vorratsbehälter angeordneten Förderschnecke o. dgl. erfolgen.

Im Rahmen der Erfindung liegt es auch, daß die Vorrichtung zum Befüllen wenigstens zweier Gießformen mit Gießharz ausgebildet ist mit jeder Gießform zugeordneter Mischeinrichtung, wobei jede Mischeinrichtung über absperrbare Zuführungsleitungen mit den Kolben-Zylinder-Anordnungen verbunden ist. Hierdurch können mehrere Gießformen zeitversetzt befüllt werden.

Nach einer Ausgestaltung der Erfindung kann den Gießformen jeweils mindestens eine Puffereinrichtung zugeordnet sein, welche dazu ausgebildet ist, während der Gelierphase den Nachpreßdruck auf der Gießform aufrechtzuerhalten. Eine solche Puffereinrichtung ist der Art nach bspw. in der DE 27 48 982 C2 beschrieben.

Besonders vorteilhaft ist es dabei, wenn die Puffereinrichtung der jeweiligen Mischeinrichtung vorgeschaltet ist mit jeweils einem Pufferelement für eine Komponente. Hierdurch ist es möglich, daß die Komponenten getrennt voneinander im gewünschten Rezepturverhältnis mittels den Pufferelementen der zugeordneten Mischeinrichtung zugeführt werden.

Weiterhin ist es nach der Erfindung auch vorgesehen, daß die Puffereinrichtung als Kolben-Zylinder-Anordnung mit einem Stufenkolben für die wenigstens zwei Komponenten ausgebildet ist, wodurch ein besonders kompakter und einfacher Aufbau gegeben ist.

Schließlich ist es nach einer besonderen Ausführungsform der Erfindung vorgesehen, daß die Kolben-Zylinder-Anordnungen, ggf. mit Antriebseinrichtung als Baueinheit wenigstens zweifach in bezug auf die Mischeinrichtung ausgeführt sind, wobei die beiden Baueinheiten im Gegentakt die jeweiligen Komponenten zu der Mischeinrichtung fördern. Durch die Arbeitsweise der Kolben-Zylinder-Anordnungen im Gegenhub erfolgt eine kontinuierliche Zuführung der Komponenten zur Mischeinrichtung, so daß die Gießform ohne Unterbrechung auch in mehreren Hüben gegossen werden kann. Die Verdoppelung der Baueinheiten muß nicht notwendigerweise zur Folge haben, daß auch zwei Antriebsaggregate für die Antriebseinrichtung vorhanden sein müssen. Bspw. kann nur ein Antriebsaggregat genügen, wie bspw. ein Hydraulikaggregat zur Beaufschlagung der Antriebseinheiten, welche ihrerseits auf die Förderkolben der Kolben-Zylinder-Anordnungen wirken.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine schematische Darstellung einer Vorrichtung zur Abgabe von Gießharz,
- Figur 2: eine andere Ausführungsform einer erfindungsgemäßen Vorrichtung,
- Figur 3: eine wiederum eine andere Ausführungsform einer erfindungsgemäßen Vorrichtung,
- Figur 4: eine vierte Ausführungsform einer erfindungsgemäßen Vorrichtung,
- Figur 5: die Darstellung einer Kolben-Zylinder-Anordnung zur Förderung einer Komponente gemäß den Figuren 1 bis 4, jedoch mit zusätzlichem Absperrorgan im Zylinderboden,
- Figur 6: die Darstellung einer Kolben-Zylinder-Anordnung mit Plungerkolben zur Förderung einer Komponente,
- Figur 7: eine erfindungsgemäße Vorrichtung, ähnlich Figur 3, jedoch für einen Vielfachverguß und
- Figur 8: ein Pufferelement für eine Druckgeliervorrichtung gemäß Figur 7.

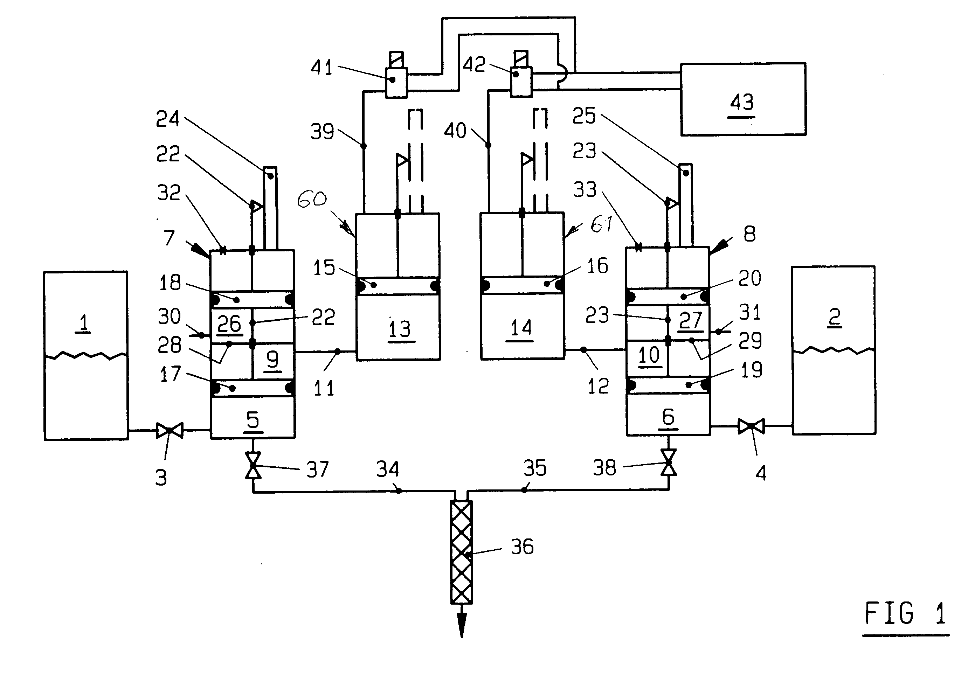

Die Dosiereinrichtung gemäß Figur 1 weist zwei Vorratsbehälter 1, 2 für die Komponenten der Gießmasse bzw. des Gießharzes auf.

Die Vorratsbehälter 1, 2 können unter Vakuum gehalten sein, was jedoch nicht in jedem Fall erforderlich ist. Von den Vorratsbehältern 1, 2 gelangt die jeweilige Komponente über, vorzugsweise mit Absperrventilen 3 bzw. 4 versehene Zuführungsleitungen in den Produktraum 5, 6 der Kolben-Zylinder-Anordnungen 7, 8. Die Kolben-Zylinder-Anordnungen 7, 8 weisen weiterhin einen Raum 9 bzw. 10 für das Antriebsfluid auf, wobei diese Räume 9, 10 über Verbindungsleitungen 11, 12 jeweils mit einem Antriebskolbenraum 13, 14 einer Antriebskolben-Zylinder-Anordnung 60, 61 verbunden sind. Die Kolben-Zylinder-Anordnungen 7, 8 weisen jeweils einen Förderkolben 17, 19 und in Abstand dazu an einer Kolbenstange 22, 23 angeordnete Rückzugskolben 18, 20 auf. An einer Verlängerung der Kolbenstange 22, 23 sind Ingrementalgeber 24, 25 zur Ermittlung der Hubwege der Kolben-Zylinder-Anordnungen 7, 8 angebracht. In die Rückzugsräume 26, 27, welche durch eine Zwischenwand 28, 29 von dem Antriebsflüssigkeitsraum 9, 10 getrennt sind, kann über einen Anschluß 30, 31 ein Druckmedium, bspw. Preßluft, für die Rückzugsbewegung der Kolben 19, 20 und 17, 18 eingeleitet werden. Zusätzlich ist auf der Rückseite der Rückzugskolben 18, 20 an den Zylindern eine Entlüftung 32, 33 angeordnet.

Die von dem Produktraum 5, 6 abführenden Komponentenleitungen 34, 35 führen zu einer Mischeinrichtung 36 und sind über Ventile 37, 38 absperrbar.

Die Wirkungsweise der erfindungsgemäßen Vorrichtung ist wie folgt:

Durch Einleiten von Rückzugsmedium über die Anschlüsse 30, 31 werden die Kolben 17, 18 und 19, 20 zurückbewegt, wobei die Ventile 3, 4 geöffnet und die Ventile 37, 38 geschlossen sind. Hierdurch fließen die Komponenten aus den Vorratsbehältern 1, 2 in die entsprechenden Produkträume 5, 6. Bei der Rückzugsbewegung der Kolben 17, 18 und 19, 20 wird die Antriebsflüssigkeit in dem Antriebsraum 9, 10 verdrängt, indem diese über die Verbindungsleitungen 11, 12 in den Zylinderraum 13, 14 der Antriebskolben-Zylinder-Anordnungen 60, 61 fließt, wobei das auf der Rückseite der Antriebskolben 15, 16 befindliche Fluid über Zuführungsleitungen 39, 40 und Ventile 41, 42 in das Antriebsaggregat 43 für das Antriebsfluid gelangt.

Im nächsten Schritt werden die Ventile 3, 4 geschlossen und die Ventile 37, 38 zur Mischeinrichtung 36 hin geöffnet. Dabei werden die Antriebskolben 15, 16 mit Druckfluid aus dem Aggregat 43 beaufschlagt, wodurch die im Kolbenraum 13, 14 befindliche Antriebsflüssigkeit in den Antriebsraum 9, 10 der Kolben-Zylinder-Anordnungen 7, 8 gelangt und deren Kolben-Anordnung 18, 17 bzw. 20, 19 einen Hub ausführen, so daß die Komponenten synchron und im gewünschten Volumenverhältnis zu der Mischeinrichtung 36 gelangen und dort miteinander vermischt werden.

Für die Synchronisation der Hubbewegungen ist eine (nicht gesondert dargestellte) Steuereinheit vorgesehen, welche in Abhängigkeit von den Inkrementalgebern 24, 25 über die Ventile 41, 42 die gewünschten Hubverhältnisse in synchroner Weise steuert. Die beschriebene Vorrichtung gestattet eine freie Vorwahl der jeweils zugeführten Volumenverhältnisse und Fördergeschwindigkeiten der Komponenten und ermöglicht es, bei entsprechendem Viskositätsbereich der Komponenten und entsprechend angepaßter Nennweite der Zuführungsleitungen und/oder Ventile ohne zusätzliche Ladepumpen für die Zuführung der Komponenten auszukommen. Die Vorrichtung ist universell einsetzbar für unterschiedliche Volumen der Gießlinge. Die Antriebskolben-Zylinder-Anordnungen 60, 61 und die Produktkolben-Zylinder-Anordnungen 7, 8 sind als Baugruppen voneinander getrennt, so daß es möglich ist, für die gleichen Grundbaueinheiten 7, 8 unterschiedliche Antriebsbaugruppen 60, 61 vorzusehen. Hierdurch ist insgesamt ein Baukastensystem gegeben. Dies ermöglicht es, die Vorrichtung für die Zugabe von Komponenten in einfacher Weise auf die jeweiligen Verhältnisse auszulegen.

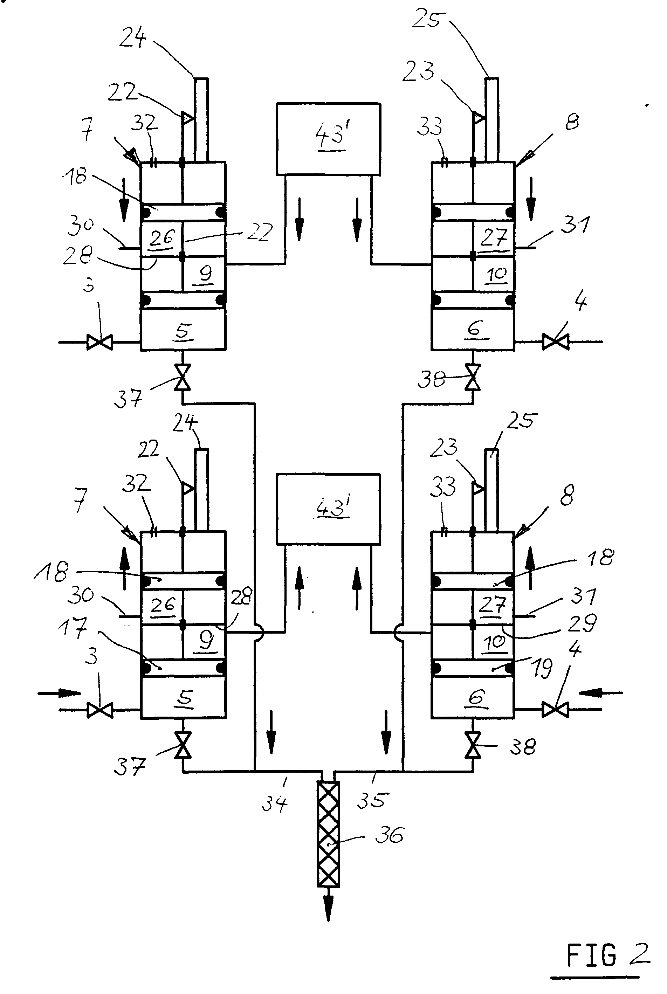

Die Vorrichtung gemäß Figur 1 kann hubweise arbeiten, um das gemischte Material in Hüben der jeweiligen Gießform zur Verfügung zu stellen. Denkbar ist aber auch eine kontinuierliche Zuführung zur Gießform, indem zu der Baueinheit gemäß Figur 1 eine zweite Baueinheit vorgesehen wird, welche im Gegenhub dazu arbeitet und die jeweiligen Komponenten ebenfalls der Mischeinrichtung 36 zuführt, wie dies in Figur 2 dargestellt ist. Hierdurch ist ein kontinuierlicher Füllbetrieb ohne Gießstrahlunterbrechung ermöglicht. Bei dem Ausführungsbeispiel gemäß Figur 2 sind die den Bauteilen gemäß Figur 1 entsprechenden Einzelteile mit gleichen Bezugszeichen versehen. Die Antriebseinheiten bei der Vorrichtung gemäß Figur 2 sind mit Bezugszeichen 43' bezeichnet, um anzudeuten, daß Varianten des Antriebes gemäß den in Figuren 1, 3 und 4 dargestellten Ausführungsbeispielen eingesetzt werden können. Während die Baueinheiten mit Kolben-Zylinder-Anordnungen und Antriebseinheit verdoppelt sind, empfiehlt es sich aus Gründen der einfacheren Konstruktion, die beiden Vorratsbehälter für die Komponenten jeweils nur einzählig auszubilden.

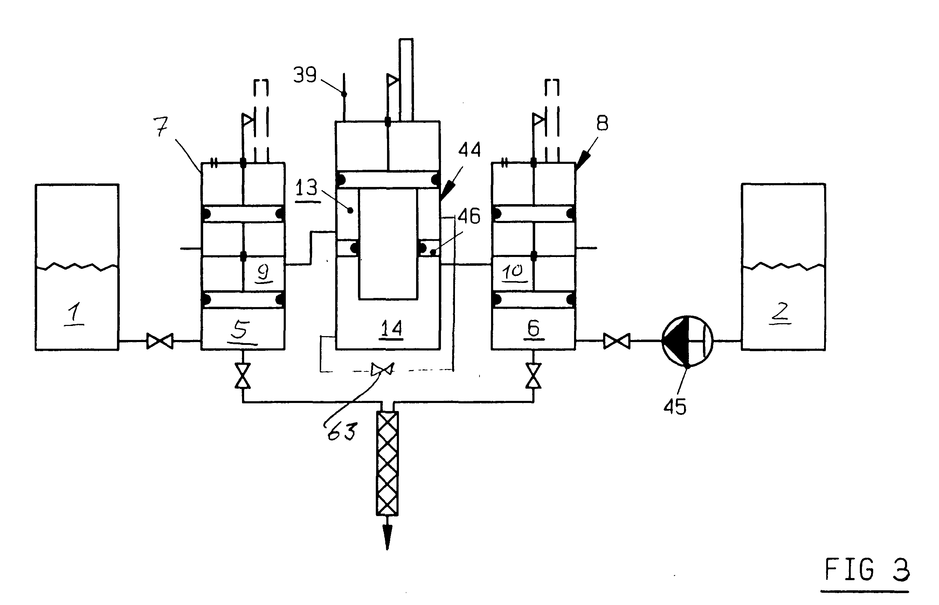

Der Vorteil der beschriebenen Vorrichtung in Form einer Modulbauweise unter Austausch der Antriebskolben-Zylinder-Anordnungen ist auch aus Figur 3 zu ersehen. Die Vorrichtung gemäß Figur 3 unterscheidet sich von der in Figur 1 dargestellten dadurch, daß für die Antriebseinheit eine Stufenkolben-Zylinder-Anordnung 44 vorgesehen ist, dessen Zylinderräume 13, 14 mit den Antriebsräume 9, 10 der Kolben-Zylinder-Anordnungen 7, 8 verbunden sind. Hierdurch ist das Dosierverhältnis eindeutig festgelegt und die Synchronisation der beiden Kolben-Zylinder-Anordnungen 7, 8 gegeben. Weiterhin ist in Figur 3 die Möglichkeit aufgezeigt, eine Komponente aus einem Vorratsbehälter 1, 2 mittels einer Ladepumpe 45 in den Produktraum, im vorliegenden Fall in den Produktraum 6 der Kolben-Zylinder-Anordnung 8 zuzuführen. Die Zwischenschaltung einer zusätzlichen Ladepumpe wird man insbesondere bei entsprechenden Viskositäten einer Einzelkomponente in Betracht ziehen. Selbstverständlich kann auch jeder Kolben-Zylinder-Anordnung eine Ladepumpe zugeordnet sein.

Bei der Stufenkolben-Zylinder-Anordnung 44 sind die beiden Zylinderräume 13, 14 durch eine Trennwandung 46 mit Dichtungen voneinander getrennt, wobei in vorteilhafter Weise die Dichtung auf beiden Seiten mit nicht abrasiven bzw. nicht miteinander reagierenden Material in Berührung steht.

Die Ausführungsform der Antriebseinheit gemäß Figur 3 wird man insbesondere dann wählen, wenn das Mischungsverhältnis der Komponenten festliegt oder über längere Zeit nicht geändert wird. Dabei ist es auch möglich, den Stufenkolben zur Änderung des Mischungsverhältnisses zu wechseln. Die beschriebene Anlage ist gegenüber derjenigen gemäß Figur 1 steuerungstechnisch weniger aufwendig.

Zwischen den Zylinderräumen 13, 14 ist eine Ausgleichsventileinrichtung 63 vorgesehen, um die Füllzustände der einzelnen Kolben-Zylinder-Anordnungen 7, 8 vor Beginn der Förderung abtasten und die zu beaufschlagenden Fluidmengen des Antriebssystems ausgleichen beziehungsweise abstimmen zu können.

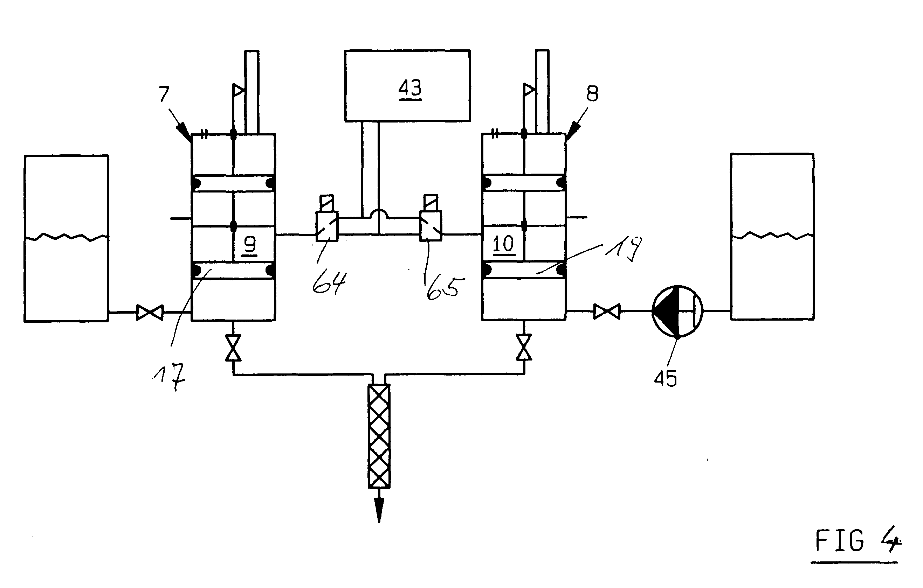

Eine weitere Ausführungsvariante des Grundsystemes gemäß Figuren 1 bis 3 ist in Figur 4 dargestellt. Hierbei ist die Antriebseinheit 43 als Druckmedium-Aggregat ausgebildet, wobei ein direkter Anschluß zu den Antriebsräumen 9, 10 der Kolben-Zylinder-Anordnungen 7, 8 gegeben ist. Gemeinsam mit der Ausführungsvariante gemäß Figur 1 ist auch hier das Dosier-bzw. Mischungsverhältnis der Komponenten frei einstellbar. Allerdings muß bei dieser Variante dafür Sorge getragen werden, daß das vom Druckmedium-Aggregat 43 zugeführte Druckmedium mit der jeweiligen Komponente chemisch verträglich ist. Für die Synchronbewegung der Kolben-Zylinder-Anordnung 7, 8 sind die Zuführungsleitungen des Druckfluids Steuer- bzw. Regelventile 64, 65 eingesetzt.

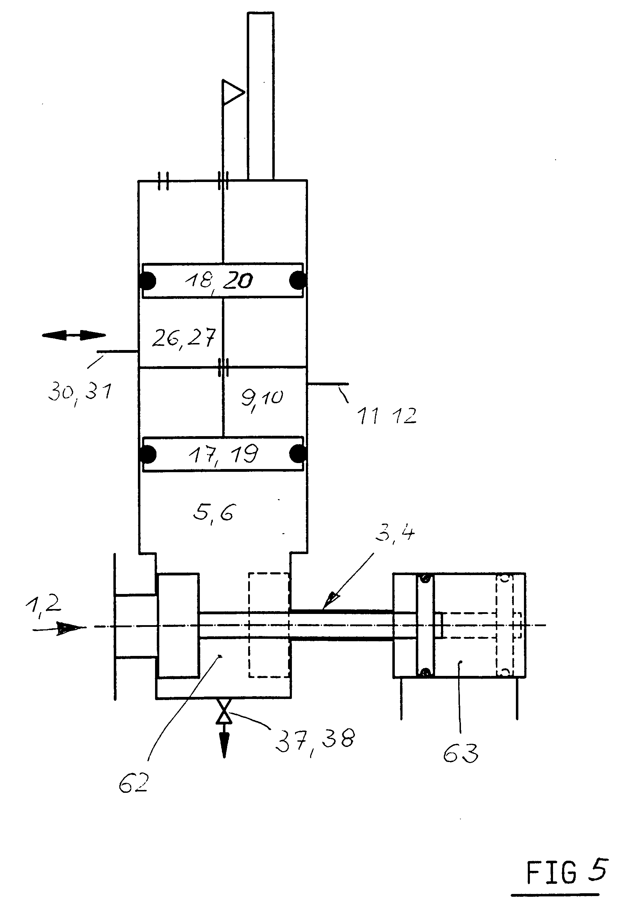

In Figur 5 ist eine Kolben-Zylinder-Anordnung zur Förderung einer Komponente des Gießharzes dargestellt, wobei das Absperrorgan 3, 4 für den Einlaß der Komponente in den sich an den Förderraum 5 bzw. 6 anschließenden Gehäuseboden 62 integriert ist. Durch diese Maßnahme lassen sich die Zuflußwege von Vorratsbehälter 1, 2 zu den Kolben-Zylinder-Anordnungen 7, 8 auf ein Minimum reduzieren. Bei dem gewählten Ausführungsbeispiel ist das Absperrorgan 3, 4 mit einem Pneumatik- oder Hydraulikzylinder 63 betätigbar.

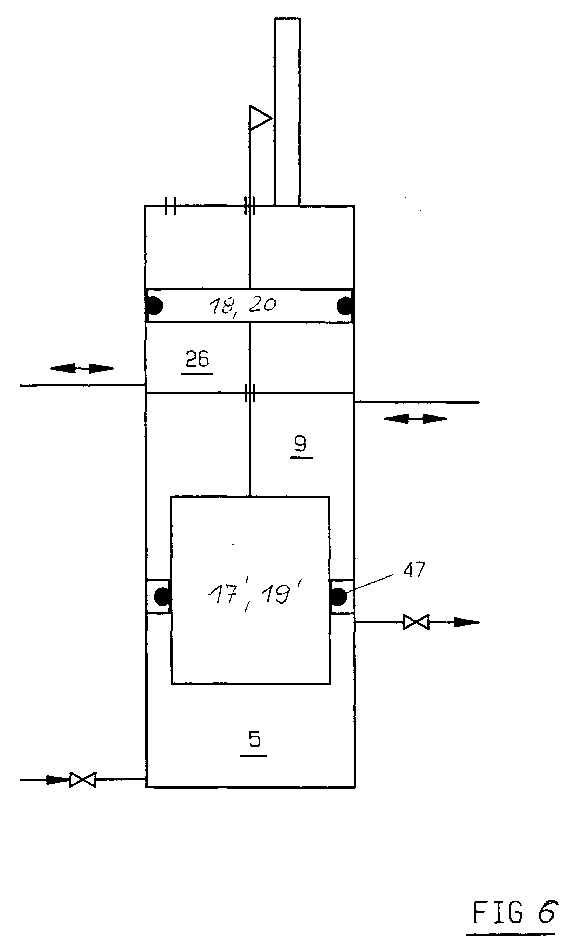

Anstelle den in Figuren 1 bis 4 gezeigten Kolben-Zylinder-Anordnungen 7, 8 kann selbstverständlich auch eine Kolben-Zylinder-Anordnung mit einem Plunger-Kolben gemäß Figur 6 eingesetzt werden. Dabei ist in Analogie zu dem Ausführungsbeispiel gemäß Figur 1 mit 5 der Produktraum, mit 9 der Antriebsraum und mit 26 der Kolbenrückzugsraum bezeichnet, während der Förderkolben mit 17' bzw. 19' angezogen ist. Der Rückzugskolben ist wiederum mit Bezugszeichen 18, 20 bezeichnet. Die Trennung zwischen Produktraum 5 und Antriebsraum 9 erfolgt durch eine im Zylinderraum feststehende Dichtung 47.

Selbstverständlich ist auch das Material der Kolben-Zylinder-Anordnungen beliebig, bspw. kann eine Keramik, insbesondere eine Oxydkeramik eingesetzt werden.

Auch versteht es sich, daß anstelle von Fluidantrieben mechanische Antriebe, wie bspw. Gewindespindelantriebe für die Bewegung der Antriebskolben 15, 16 bzw. 44 verwendet werden können.

Auch ist es in gleicher Weise möglich, daß die erfindungsgemäße Vorrichtung nicht nur für zwei, sondern für mehrere Komponenten der Gießmasse eingesetzt wird, wobei dann Vorratsbehälter, Zuführungsleitung, Kolben-Zylinder-Anordnungen und Antriebseinheit, bspw. als Dreifachstufen-Kolben, entsprechend vervielfacht wird. Auch kann die Vorrichtung in programmierbaren Abläufen reproduzierbar arbeiten. Weiterhin ist es möglich, die Vorrichtungen gemäß Figuren 1 bis 4 gleichzeitig als Druck-Halte-Einrichtungen beim Druckgelieren zur Aufrechterhaltung des Nachpreßdruckes einzusetzen. Die erfindungsgemäße Vorrichtung ist aber ersichtlich nicht nur für das Druckgelierverfahren, sondern auch für alle weiteren Gießanwendungen geeignet.

Sofern Ingrementalgeber benötigt werden, ist es selbstverständlich möglich, diese an den produktseitigen Kolben-Zylinder-Anordnungen 7, 8 und/oder auch an den antriebsseitigen Kolben-Zylinder-Anordnungen 60, 61 bzw. 44 vorzusehen. Vorzugsweise werden sie an den produktseitigen Kolben-Zylinder-Anordnungen 7, 8 angeordnet, da insoweit eine höhere Meßgenauigkeit gegeben ist.

Ein weiterer Vorteil der erfindungsgemäßen Vorrichtung ist, daß im Vergleich zu Förderpumpen wesentlich höhere Drücke gefahren werden können, so daß sowohl mit den Einzelkomponenten als auch mit der Gießmasse größere Entfernungen bei entsprechend kleinen Leitungsquerschnitten zu den Gießformen überwunden werden können.

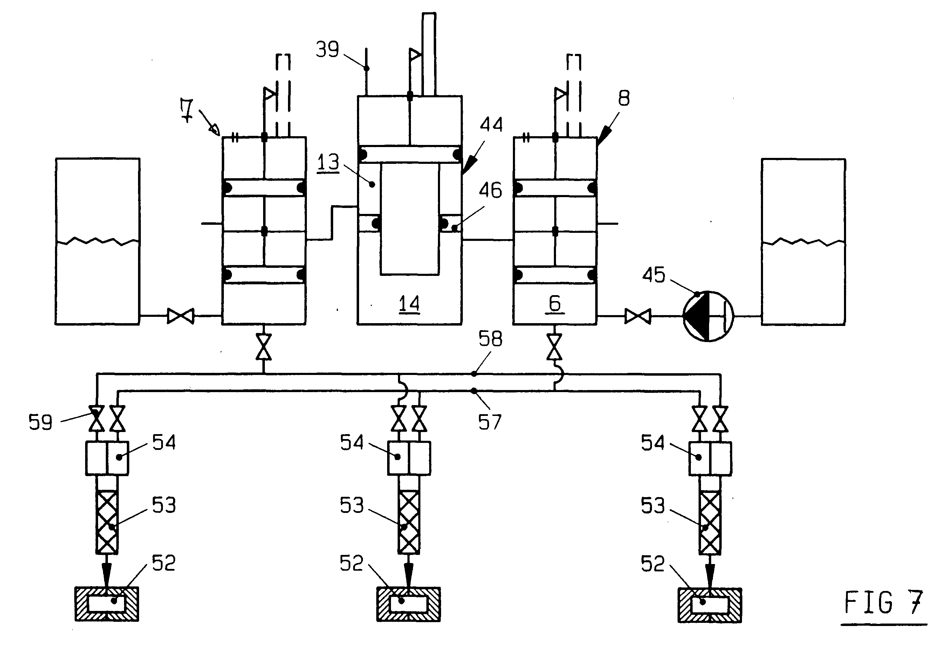

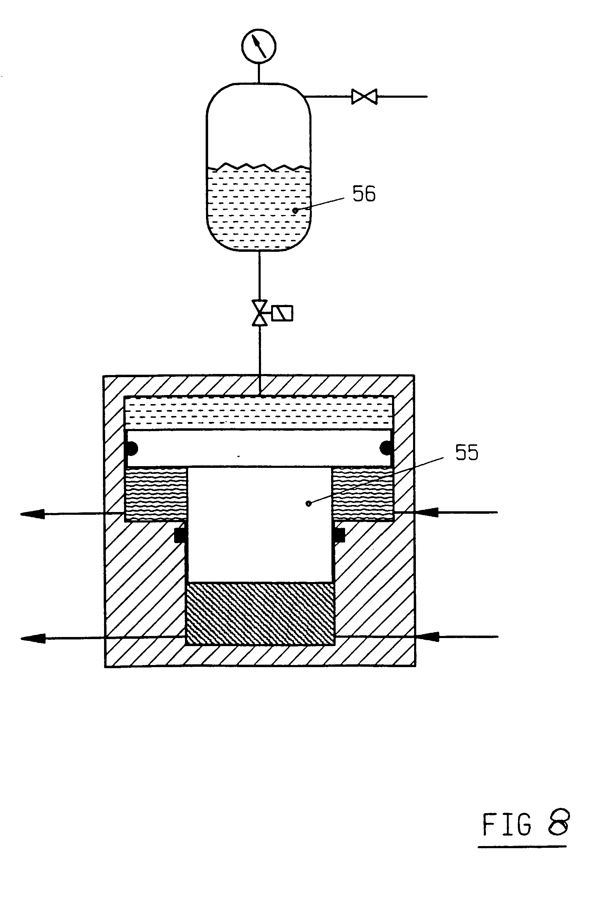

Figur 7 zeigt eine Abwandlung der zuvor beschriebenen Systeme, insbesondere desjenigen nach Figur 3. Um eine bessere Ausnutzung der Dosieranlage zu ermöglichen, ist jeder Gießform 52 ein Durchlaufmischer 53 mit Puffereinrichtung 54 zugeordnet. Hierdurch können mehrere Gießformen 52 zeitversetzt befüllt und von der jeweiligen Puffereinrichtung 54 während der Gelierphase unter Nachpreßdruck gehalten werden. Eine mögliche Ausführungsform einer vor den Durchlaufmischern 53 angeordneten Puffereinrichtung 54 ist beispielhaft in Figur 8 dargestellt, in welcher die Komponenten getrennt voneinander zugeführt und im gewünschten Rezepturverhältnis weitergeleitet werden. Die Puffereinrichtung 54 kann ähnlich der Kolben-Zylinder-Anordnung 44 gemäß Figur 3 aufgebaut sein mit einem Stufenkolben 55 und einem in einem Druckbehälter 56 aufgenommenen Arbeitsfluid.

Die Zuführung der Einzelkomponenten zu der Puffereinrichtung 54 erfolgt über Zuführleitungen 57, 58, wobei in den Anschlußleitungen zu den Puffereinrichtungen 54 jeweils Absperrventile 59 geschaltet sind, um während der Druckgelierphase die Puffereinrichtungen 54 mit zugeordnetem Durchlaufmischer 53 und Gießform 52 von dem übrigen System abzukoppeln. Hierdurch ist eine Vielfachausnutzung des Dosiersystems ermöglicht.

## Patentansprüche

1. Vorrichtung für die Abgabe von fließfähigen, aus wenigstens zwei miteinander reagierenden Komponenten bestehenden Stoffen, insbesondere Gießharz, wobei die Komponenten aus Vorratsbehältern (1, 2) zugeordneten Kolben-Zylinder-Anordnungen (7, 8) zugeführt und von dort zu einer Mischeinrichtung (36) gefördert werden, wobei Rückzugseinrichtungen (18, 20) für die Förderkolben (17, 19) und Antriebseinrichtungen (60, 61) zur Beaufschlagung der Förderkolben (17, 19) mit einem Druckfluid vorgesehen sind und die förderseitigen und antriebsseitigen Kolbenwirkflächen der Kolben-Zylinder-Anordnungen (7, 8) annähert gleich groß sind, dadurch gekennzeichnet, daß jeder Kolben-Zylinder-Anordnung (7, 8) eine separate Rückzugseinrichtung (18, 20) zugeordnet ist, daß für die Synchronisation der Hubbewegungen der Förderkolben (17, 19) eine Steuereinheit für die dosierte Zufuhr des Antriebsfluids auf die Förderkolben (17, 19) sowie eine Ausgleichsventileinrichtung vorgesehen ist, welche vor Beginn der Förderung die Füllzustände der Kolben-Zylinder-Anordnungen abtastet und die zu beaufschlagenden Fluidmengen des Antriebssystems ausgleicht beziehungsweise abstimmt.

2. Vorrichtung nach Anspruch 1, dadurch gekennzeichnet, daß das Verdrängungsvolumen der Kolben-Zylinder-Anordnungen (7, 8) jeweils zwischen 0,1 und 4 Liter, vorzugsweise bei etwa 1 Liter liegt.

3. Vorrichtung nach einem der vorhergehenden Ansprüche, dadurch gekennzeichnet, daß wenigstens eine Einrichtung (24, 25) zur Erfassung der Position des bzw. der Förderkolben (17, 19) vorgesehen ist.

4. Vorrichtung nach einem der vorhergehenden Ansprüche, dadurch gekennzeichnet, daß ein Absperrorgan (3, 4) für den Ein- und/oder Auslaß der Komponente in den Förderraum, vorzugsweise in den sich an den Förderraum anschließenden Gehäuseboden (62) der jeweiligen Kolben-Zylinder-Anordnung (7, 8) integriert ist.

5. Vorrichtung nach einem der vorhergehenden Ansprüche, dadurch gekennzeichnet, daß der Förderkolben (17, 19) der Kolben-Zylinder-Anordnung (7, 8) und der Rückzugskolben (18, 20) der zugeordneten Rückzugseinrichtung in Abstand voneinander an einer Kolbenstange (22, 23) gehalten sind und zwischen Förderkolben (17, 19) und Rückzugskolben (18, 20) eine Zwischenwandung (28, 29) angeordnet ist, die einen dem Förderkolben (17, 19) zugewandten Antriebsraum (9, 10) für das Antriebsfluid und einen dem Rückzugskolben (18, 20) zugewandten Raum (26) zur Beaufschlagung mit einem Fluid für die Rückzugsbewegung des Förderkolbens (17, 19) voneinander trennt.

6. Vorrichtung nach einem der vorhergehenden Ansprüche, dadurch gekennzeichnet, daß jeder Kolben-Zylinder-Anordnung (7, 8) jeweils eine Antriebskolben-Zylinder-Anordnung (60, 61) zugeordnet ist, deren Zylinderraum (13, 14) mit dem Antriebsraum (9, 10) der jeweiligen Kolben-Zylinder-Anordnung (7, 8) verbunden ist (Figur 1).

7. Vorrichtung nach einem der Ansprüche 1 bis 5, dadurch gekennzeichnet, daß die Antriebsrichtung eine Antriebskolben-Zylinder-Anordnung (44) mit einem Stufenkolben aufweist, dessen einzelne Zylinderräume (13, 14) jeweils einem Antriebsraum (9, 10) einer Kolben-Zylinder-Anordnung (7, 8) zugeordnet sind (Figur 3).

8. Vorrichtung nach einem oder mehreren der Ansprüche 1 bis 5, dadurch gekennzeichnet, daß die Antriebseinrichtung unter Zwischenschaltung von Steuer- und/oder Regelventilen (64, 65) für eine direkte Beaufschlagung der Förderkolben (17, 19) mit Druckfluid ausgebildet ist (Figur 4).

9. Vorrichtung nach einem der vorhergehenden Ansprüche, dadurch gekennzeichnet, daß die Antriebseinrichtung dazu ausgebildet ist, vermittels des Antriebsfluids über die Förderkolben (17, 19) der Kolben-Zylinder-Anordnungen (7, 8) während der Gelierphase einen entsprechenden Nachpreßdruck auf der wenigstens einen Gießform (52) aufrechtzuerhalten.

10. Vorrichtung nach einem der vorgehenden Ansprüche, dadurch gekennzeichnet, daß der Förderkolben der jeweiligen Kolben-Zylinder-Anordnung als Plungerkolben (17', 19') ausgebildet ist, wobei die Trennung zwischen Produktraum (5) für die Aufnahme der jeweiligen Komponente und Antriebsraum (9) für die Beaufschlagung mit dem Antriebsfluid durch eine vorzugsweise im Zylinderraum feststehende Dichtung (47) erfolgt (Figur 6).

11. Vorrichtung nach einem der vorhergehenden Ansprüche, dadurch gekennzeichnet, daß für die Zuführung der jeweiligen Komponente vom Vorratsbehälter (1, 2) zur Kolben-Zylinder-Anordnung (7, 8) eine Ladepumpe o. dgl. Pumpeinrichtung (45) vorgesehen ist.

12. Vorrichtung nach einem der vorhergehenden Ansprüche, dadurch gekennzeichnet, daß sie zum Befüllen wenigstens zweier Gießformen (52) mit Gießharz ausgebildet ist mit jeder Gießform (52) zugeordneter Mischeinrichtung (53), wobei jede Mischeinrichtung (53) über absperrbare Zuführungsleitungen (57, 58) mit den Kolben-Zylinder-Anordnungen (7, 8) verbunden ist (Figur 7).

13. Vorrichtung nach Anspruch 12, dadurch gekennzeichnet, daß den Gießformen (52) jeweils mindestens eine Puffereinrichtung (54) zugeordnet ist, welche dazu ausgebildet ist, während der Gelierphase den Nachpreßdruck auf der jeweiligen Gießform (52) aufrechtzuerhalten.

14. Vorrichtung nach Anspruch 13, dadurch gekennzeichnet, daß die Puffereinrichtung (54) der jeweiligen Mischeinrichtung (52) vorgeschaltet ist mit jeweils einem Pufferelement für eine Komponente.

15. Vorrichtung nach einem der Ansprüche 13 oder 14, dadurch gekennzeichnet, daß die Puffereinrichtung (54) als Kolben-Zylinder-Anordnung mit einem Stufenkolben (55) für die wenigstens zwei Komponenten ausgebildet ist (Figur 8).

16. Vorrichtung nach einem der vorhergehenden Ansprüche, dadurch gekennzeichnet, daß die Kolben-Zylinder-Anordnungen (7, 8) ggf. mit Antriebseinrichtungen (43') als Baueinheit wenigstens zweifach in bezug auf die Mischeinrichtung (36) ausgeführt sind, wobei die beiden Baueinheiten im Gegentakt die jeweiligen Komponenten zur Mischeinrichtung (36) fördern (Figur 2).

## Claims

1. Device for the delivery of flowable substances, especially casting resin, consisting of at least two components which react with one another, wherein the components are fed from storage containers (1, 2) to associated piston-cylinder arrangements (7, 8) and from there are conveyed to a mixing device (36), wherein retraction devices (18, 20) for the conveying pistons (17, 18) and drive devices (60, 61) for loading the conveying pistons (17, 19) with a pressure fluid are provided and the effective piston areas, which are at the conveying side and drive side, of the piston-cylinder arrangements (7, 8) are approximately equal in size, characterised in that a separate retraction device (18, 20) is associated with each piston-cylinder arrangement (7, 8) and that for the synchronisation of the stroke movements of the conveying pistons (17, 19) there is provided a control unit for the metered feed of the drive fluid to the conveying pistons (17, 19) as well as a balancing valve arrangement which, before the start of the conveying, scans the filling states of the piston-cylinder arrangements and balances or matches the fluid quantities, which are to act, of the drive system.

2. Device according to claim 1, characterised in that the displacement volumes of the piston-cylinder arrangements (7, 8) each lie between 0.1 and 4 litres, preferably at about 1 litre.

3. Device according to one of the preceding claims, characterised in that at least one device (24, 25) for detection of the position of the conveying piston or pistons (17, 19) is provided.

4. Device according to one of the preceding claims, characterised in that a blocking element (3, 4) for the inlet and/or outlet of the components into or out of the conveying chamber is integrated preferably into the housing base (62), which is connected to the conveying chamber, of the respective piston-cylinder arrangement (7, 8).

5. Device according to one of the preceding claims, characterised in that the conveying pistons (17, 19) of the piston-cylinder arrangement (7, 8) and the retraction pistons (18, 20) of the associated retraction device are mounted at a mutual spacing at a piston rod (22, 23) and a partition (28, 29), which separates a drive chamber (9, 10), which faces the conveying piston (17, 19), for the drive fluid from a chamber (26), which faces the retraction piston (18, 20), for loading with a fluid for the retraction movement of the conveying piston (17, 19), is arranged between the conveying pistons (17, 19) and retraction pistons (18, 20).

6. Device according to one of the preceding claims, characterised in that each piston-cylinder arrangement (7, 8) is associated with a respective drive piston-cylinder arrangement (60, 61), the cylinder chamber (13, 14) of which is connected with the drive chamber (9, 10) of the respective piston-cylinder arrangement (7, 8) (Figure 1).

7. Device according to one of claims 1 to 5, characterised in that the drive device comprises a drive piston-cylinder arrangement (44) with a stepped piston, the individual cylinder chambers (13, 14) of which are each associated with a respective drive chamber (9, 10) of a piston-cylinder arrangement (7, 8) (Figure 3).

8. Device according to one or more of claims 1 to 5, characterised in that the drive device is constructed, with interposition of control valves and/or regulating valves (64, 65), for a direct loading of the conveying pistons (17, 19) with pressure fluid (Figure 4).

9. Device according to one of the preceding claims, characterised in that the drive device is constructed for the purpose of maintaining an appropriate re-pressing pressure on the at least one casting mould (52) by means of the drive fluid by way of the conveying pistons (17, 19) of the piston-cylinder arrangements (7, 8) during the gelling phase.

10. Device according to one of the preceding claims, characterised in that the conveying piston of the respective piston-cylinder arrangement is constructed as a plunger piston (17', 19'), wherein the separation between product chamber (5) for reception of the respective components and drive chamber (9) for loading with the drive fluid is effected by a seal (47) preferably fixed in the cylinder chamber (Figure 6).

11. Device according to one of the preceding claims, characterised in that a charging pump for the like pumping device (45) is provided for the feed of the respective components from the storage container (1, 2) to the piston-cylinder arrangement (7, 8).

12. Device according to one of the preceding claims, characterised in that for the filling of at least two casting moulds (52) with casting resin it is constructed with a mixing device (53) associated with each casting mould (52), wherein each mixing device (53) is connected with the piston-cylinder arrangements (7, 8) by way of blockable feed ducts (57, 58) (Figure 7).

13. Device according to claim 12, characterised in that the casting moulds (52) are each associated with at least one buffer device (54), which is constructed for the purpose of maintaining the re-pressing pressure on the respective casting mould (52) during the gelling phase.

14. Device according to claim 13, characterised in that the buffer device (54) is connected upstream of the respective mixing device (52) by a respective buffer element for each component.

15. Device according to one of claims 13 and 14, characterised in that the buffer device (54) is constructed as a piston-cylinder arrangement with a stepped piston (55) for the at least two components (Figure 8).

16. Device according to one of the preceding claims, characterised in that the piston-cylinder arrangements (7, 8) optionally together with drive devices (43') are executed as a constructional unit in at least double form with respect to the mixing device (36), wherein the two constructional units convey the respective components to the mixing device (36) in opposite phase (Figure 2).

## Revendications

1. Dispositif pour la délivrance de matériaux fluides, notamment une résine de coulée, formés par au moins deux constituants qui réagissent entre eux, dans lequel les constituants sont amenés à des dispositifs à piston et cylindre (7,8), qui sont associés à des réservoirs (1,2) et sont entraînés, à partir de là, jusqu'à un mélangeur (36), il est prévu des dispositifs de retrait (18,20) pour les pistons de refoulement (17,19) et des dispositifs d'entraînement (60, 61) pour charger les pistons de refoulement (17,19) avec un fluide sous pression, et les surfaces actives, situées sur le côté refoulement et sur le côté entraînement, des pistons des dispositifs à piston et cylindre (7,8) sont approximativement égales, caractérisé en ce qu'un dispositif séparé de retrait (18,20) est associé à chaque dispositif à piston et cylindre (7,8), que pour la synchronisation des déplacements de levage des pistons de refoulement (17,19) il est prévu une unité de commande pour l'amenée dosée du fluide d'entraînement aux pistons de refoulement (17,19) ainsi qu'un dispositif à soupape de compensation, qui explore, avant le début du refoulement, les niveaux de remplissage des dispositifs à piston et cylindre et qui compense ou règle d'une manière accordée les quantités de fluide, qui doivent être chargées, du système d'entraînement.

2. Dispositif selon la revendication 1, caractérisé en ce que le volume de refoulement des dispositifs à piston et cylindre (7,8) est situé respectivement entre 0,1 et 4 litres et de préférence est égal à environ 1 litre.

3. Dispositif selon l'une des revendications précédentes, caractérisé en ce qu'il est prévu au moins un dispositif (24,25) pour détecter la position du ou des pistons de refoulement (17,19).

4. Dispositif selon l'une des revendications précédentes, caractérisé en ce qu'un organe de blocage (3, 4) pour l'entrée et/ou la sortie des constituants est intégré dans la chambre de refoulement, de préférence dans les fonds (62), qui se raccordent à la chambre de refoulement, des boîtiers des dispositifs respectifs à piston et cylindre (7,8).

5. Dispositif selon l'une des revendications précédentes, caractérisé en ce que le piston de refoulement (17,19) du dispositif à piston et cylindre (7,8) et le piston de retrait (18,20) du dispositif associé de retrait sont retenus à distance l'un de l'autre sur une tige de piston (22,23) et qu'entre le piston de refoulement (17,19) et le piston -de retrait (18,20) est disposée une paroi intercalaire (28,29), qui sépare l'une de l'autre une chambre d'entraînement (9,10) pour le fluide d'entraînement, tournée vers le piston de refoulement (17,19), et une chambre (26), tournée vers le piston de retrait (18, 20) et destinée à être chargée par un fluide pour le déplacement de retrait du piston de refoulement (17,19).

6. Dispositif selon l'une des revendications précédentes, caractérisé en ce qu'à chaque dispositif à piston et cylindre (7,8) est associé respectivement un dispositif à piston et cylindre d'entraînement (60,61), dont la chambre cylindrique (13,14) est reliée à la chambre d'entraînement (9,10) du dispositif respectif à piston et cylindre (7,8) (figure 1).

7. Dispositif selon l'une des revendications 2 à 5, caractérisé en ce que le dispositif d'entraînement comporte un dispositif à piston et cylindre d'entraînement (44) comportant un piston étagé, dont les différentes chambres cylindriques (13,14) sont associées à des chambres respectives d'entraînement (9,10) de dispositifs à piston et cylindre (7,8) (figure 3).

8. Dispositif selon une ou plusieurs des revendications 1 à 5, caractérisé en ce que le dispositif d'entraînement est agencé moyennant le montage intercalé de soupapes de commande et/ou de régulation (64,65) pour une charge directe des pistons de refoulement (17,19) avec un fluide sous pression.

9. Dispositif selon l'une des revendications précédentes, caractérisé en ce que le dispositif d'entraînement est agencé de manière à maintenir à l'aide du fluide d'entraînement, au moyen des pistons de refoulement (17,19) des dispositifs à piston et cylindre (7,8), et ce pendant la phase de gélification, une pression correspondante de serrage complémentaire appliquée à au moins un moule de coulée (52).

10. Dispositif selon l'une des revendications précédentes, caractérisé en ce que le piston de refoulement du dispositif respectif à piston et cylindre est agencé en tant que piston plongeur (17',19'), la séparation entre la chambre à produit (5) servant à recevoir les constituants respectifs et la chambre d'entraînement (9) destinée à être chargée par le fluide d'entraînement est réalisée par une garniture d'étanchéité (47) de préférence montée fixe dans la chambre du cylindre (figure 6).

11. Dispositif selon l'une des revendications précédentes, caractérisé en ce qu'une pompe de charge ou un dispositif de pompe analogue (45) est prévu pour l'amenée des constituants respectifs depuis le réservoir (1,2) au dispositif à piston et cylindre (7,8).

12. Dispositif selon l'une des revendications précédentes, caractérisé en ce qu'il est agencé de manière à remplir au moins deux moules de coulée (52) avec une résine de coulée et comporte un dispositif mélangeur (53) associé à chaque moule de coulée (52), chaque dispositif mélangeur (53) étant relié aux dispositifs à piston et cylindre (7,8) par l'intermédiaire de canalisations d'amenée (57,58) pouvant être bloquées.

13. Dispositif selon la revendication 12, caractérisé en ce qu'aux moules de coulée (52) est associé respectivement au moins un dispositif tampon (54), qui est conçu de manière à maintenir, pendant la phase de gélification, la pression de serrage complémentaire appliquée au moule de coulée respectif (52).

14. Dispositif selon la revendication 13, caractérisé en ce que respectivement un élément tampon pour un constituant est branché en amont du dispositif tampon (54) du dispositif mélangeur respectif (52).

15. Dispositif selon l'une des revendications 13 ou 14, caractérisé en ce que le dispositif tampon (54) est agencé sous la forme d'un dispositif à piston et cylindre comportant un piston étagé (55) pour les au moins deux constituants (figure 8).

16. Dispositif selon l'une des revendications précédentes, caractérisé en ce que les dispositifs à piston et cylindre (7,8) éventuellement avec des dispositifs d'entraînement (43') en tant qu'unité de construction sont prévus au moins en double par rapport au dispositif mélangeur (36), les deux unités de construction entraînant en opposition les constituants respectifs en direction du dispositif mélangeur (36) (figure 2).
